(19) Europäisches Patentamt
European Patent Office
Office européen des brevets

(11) **EP 4 691 976 A2**

(12) **EUROPEAN PATENT APPLICATION**

(43) Date of publication:
**11.02.2026 Bulletin 2026/07**

(21) Application number: **25221736.9**

(22) Date of filing: **09.12.2025**

(51) International Patent Classification (IPC):
*C01B 32/00* (2017.01)  *H01M 4/133* (2010.01)
*H01M 4/583* (2010.01)  *H01M 10/0525* (2010.01)
*H01M 4/587* (2010.01)

(52) Cooperative Patent Classification (CPC):
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024 CN 202411794675**

(71) Applicant: **Ningde Amperex Technology Limited
Ningde City, Fujian Province 352100 (CN)**

(72) Inventors:
• **ZHAO, Meiqi
Ningde City 352100 (CN)**
• **SHAO, Wenlong
Ningde City 352100 (CN)**
• **ZHENG, Zigui
Ningde City 352100 (CN)**
• **XIE, Yuansen
Ningde City 352100 (CN)**

(74) Representative: **Kraus & Lederer PartGmbB
Thomas-Wimmer-Ring 15
80539 München (DE)**

(54) **HARD CARBON MATERIAL, SECONDARY BATTERY, AND ELECTRIC DEVICE**

(57)  A hard carbon material used as a component of a negative electrode material. The hard carbon material has a porous structure, an average pore diameter of the hard carbon material is D nm, a cumulative pore volume up to the average pore diameter of the hard carbon material is B $cm^3/g$, a micropore volume of the hard carbon material is A $cm^3/g$, and a total pore volume of the hard carbon material is C $cm^3/g$, where $1.00 < D/B \leq 10.00$, and $0.35 \leq A/C \leq 1.00$.

FIG. 2

EP 4 691 976 A2

**Description**

**TECHNICAL FIELD**

This application relates to the field of secondary battery technology, and in particular, to a hard carbon material, a secondary battery, and an electric device.

**BACKGROUND**

Hard carbon material is a high-hardness amorphous carbon containing a large number of $SP^3$ bonds, which can be used as a negative electrode material for lithium-ion batteries or sodium-ion batteries. When used as a negative electrode material for secondary batteries, hard carbon material also offers advantages such as a relatively low operating potential during charge and discharge. Thus, hard carbon material has broad application prospects. However, an actual specific capacity of current hard carbon materials still needs improvement.

**SUMMARY**

This application provides a hard carbon material, a secondary battery, and an electric device to provide a hard carbon material with a high specific capacity, thereby improving an energy density of a secondary battery when the hard carbon material is used as a component of a negative electrode material.

According to a first aspect, an embodiment of this application provides a hard carbon material, where the hard carbon material has a porous structure; an average pore diameter of the hard carbon material is D nm, a cumulative pore volume up to the average pore diameter of the hard carbon material is B $cm^3/g$, a micropore volume of the hard carbon material is A $cm^3/g$, and a total pore volume of the hard carbon material is C $cm^3/g$, where

$$1.00 < D/B \leq 10.00, \text{ and } 0.35 \leq A/C \leq 1.00.$$

In an embodiment, $0.20 \leq B/A \leq 1.81$.

In an embodiment, $B/A \leq 1.04$.

In an embodiment, the hard carbon material satisfies at least one of the following conditions:

$$(1) \; 1.96 \leq D/B \leq 6.00;$$

or

$$(2) \; 0.25 \leq B/A \leq 0.80.$$

In an embodiment, $1.96 \leq D/B \leq 6.00$, and $0.25 \leq B/A \leq 0.80$.

In an embodiment, $1.96 \leq D/B \leq 6.00$.

In an embodiment, $0.25 \leq B/A \leq 0.80$.

In an embodiment, $0.75 \leq A/C \leq 0.95$.

In an embodiment, the hard carbon material satisfies at least one of the following conditions:

$$(1) \; 0.10 \leq A \leq 1.30;$$

$$(2) \; 0.02 \leq B \leq 1.29;$$

$$(3) \; 0.10 \leq C \leq 1.87;$$

or

$$(4) \; 0.20 \leq D \leq 3.00.$$

In an embodiment, $0.10 \leq A \leq 1.30$.

In an embodiment, $0.02 \leq B \leq 1.29$.

In an embodiment, $0.10 \leq C \leq 1.87$.

In an embodiment, $0.20 \leq D \leq 3.00$.

In an embodiment, $0.10 \leq A \leq 1.30$, $0.02 \leq B \leq 1.29$, $0.10 \leq C \leq 1.87$, and $0.20 \leq D \leq 3.00$.

In an embodiment, within a potential range of 0 V to 2.5 V vs. Li/Li$^+$, a total delithiation specific capacity of the hard carbon material is Q mAh/g, where 500 mAh/g $\leq$ Q $\leq$ 1000 mAh/g;

within a potential range of 0 V to 0.15 V vs. Li/ Li$^+$, a specific capacity of the hard carbon material is $Q_1$ mAh/g, where $Q_1/Q$ is 45% to 85%; and

within a potential range of 0 V to 0.8 V vs. Li/ Li$^+$, a specific capacity of the hard carbon material is $Q_2$ mAh/g, where $Q_2/Q$ is 80% to 98%.

In an embodiment, $Q_1/Q \geq 67\%$.

In an embodiment, within a potential range of 0 V to 2.5 V vs. Na/Na$^+$, a total desodiation specific capacity of the hard carbon material is R mAh/g, where R is 250 mAh/g to 450 mAh/g;

within a potential range of 0 V to 0.5 V vs. Na/Na$^+$, a specific capacity of the hard carbon material is $R_1$ mAh/g, where $R_1/R$ is 80% to 91%; and

within a potential range of 0 V to 0.8 V vs. Na/Na$^+$, a specific capacity of the hard carbon material is $R_2$ mAh/g, where $R_2/R$ is 89% to 95%.

In an embodiment, the hard carbon material is obtained by pre-carbonizing a hard carbon precursor, followed by mixing with a pore-forming agent and sintering. The pore-forming agent is a weak base.

According to a second aspect, an embodiment of this application provides a negative electrode plate including a current collector and a negative electrode material disposed on at least one surface of the current collector, where the negative electrode material includes the hard carbon material according to the first aspect and any possible embodiment thereof.

According to a third aspect, an embodiment of this application provides a secondary battery, including: the negative electrode plate according to the second aspect.

According to a fourth aspect, an embodiment of this application provides an electric device, including: the secondary battery according to the third aspect.

One or more technical solutions provided in some embodiments of this application have at least the following beneficial effects.

In these embodiments of this application, the pore diameter characteristics of the hard carbon material, satisfying $1.00 < D/B \leq 10.00$ and $0.20 \leq B/A \leq 1.81$, provide sites for active ions such as lithium ions or sodium ions, effectively increasing the specific capacity of the hard carbon material; and enable the hard carbon material to have a relatively low and stable potential platform, thereby effectively improving the energy density of a secondary battery when the hard carbon material is used as a component of the negative electrode material.

Other features and advantages of this application will be described in the following specification, and some will become apparent from the specification or be understood by implementing this application. The objectives and other advantages of this application can be realized and obtained through the structures particularly pointed out in the written specification, claims, and drawings. It should be understood that the above general description and the following detailed description are only illustrative and explanatory and do not limit the present disclosure.

**BRIEF DESCRIPTION OF DRAWINGS**

To more clearly illustrate the technical solutions in some embodiments of this application or in the prior art, the drawings for these embodiments are briefly described below. It is clear that the drawings described below are merely embodiments of this application, and other drawings can be obtained by those of ordinary skill in the art without creative effort based on the provided drawings.

FIG. 1 is a schematic flowchart of a method for preparing a hard carbon material according to an embodiment of this application; and

FIG. 2 is a schematic SEM diagram of a hard carbon material prepared in Example 1.

**DETAILED DESCRIPTION**

To address the issue of insufficient specific capacity of hard carbon materials, an embodiment of this application provides a hard carbon material with a pore structure predominantly including micropores, thereby exhibiting characteristics of high micropore content and uniform pore diameter distribution. A ratio of an average pore diameter D nm to a cumulative pore volume up to the average pore diameter B $cm^3/g$, that is, D/B, satisfies $1.00 < D/B \leq 10.00$. A ratio of a micropore volume A $cm^3/g$ to a total pore volume C $cm^3/g$, that is, A/C, satisfies $0.35 \leq A/C \leq 1.00$.

Thus, the hard carbon material can store active metal ions ($Li^+$ and $Na^+$) with abundant and uniformly distributed micropore structures, thereby exhibiting a high specific capacity.

The following provides detailed descriptions of a hard carbon material, a negative electrode plate, a secondary battery, and an electric device provided in some embodiments of this application. It should be noted that the embodiments described below are only some but not all embodiments of this application. Based on the embodiments of this application, all other embodiments obtained by those of ordinary skill in the art without creative effort fall within the scope of protection of this application.

An embodiment of this application first provides a hard carbon structure, where the hard carbon structure has a porous structure. The hard carbon material is characterized by a high micropore content and uniform distribution of micropores within the hard carbon material. An average pore diameter of the hard carbon material is denoted as D nm, a cumulative pore volume up to the average pore diameter D nm is denoted as B $cm^3/g$, a micropore volume is denoted as A $cm^3/g$, and a total pore volume of the hard carbon material is C $cm^3/g$, where the aforementioned parameters satisfy the following relationships:

$$1.00 < D/B \leq 10.00, \text{ and } 0.35 \leq A/C \leq 1.00.$$

The micropore includes at least one of an open pore, closed pore, interconnected pore, and blind pore.

The micropore in the hard carbon material refer to a pore with a diameter less than 2 nm. The porous structure of the hard carbon material also includes a low content of mesopores with a pore diameter of 2 nm to 50 nm, and/or a low content of macropores with a pore diameter greater than 50 nm.

For example, the ratio of the average pore diameter D nm to the cumulative pore volume up to the average pore diameter B $cm^3/g$, that is, D/B, may be 1.00, 1.50, 2.00, 2.50, 3.00, 3.50, 4.00, 4.50, 5.00, 5.50, 6.00, 6.50, 7.00, 7.50, 8.00, 8.50, 9.00, 9.50, or 10.00, or a range defined by any two of these values.

Preferably, $1.96 \leq D/B \leq 6.00$. For example, D/B may be 1.98, 1.99, 2.02, 2.05, 2.08, 2.11, 2.14, 2.17, 2.20, 2.23, 2.26, 2.29, 2.32, 2.35, 2.38, 2.41, 2.44, 2.47, 2.50, 2.53, 2.56, 2.59, 2.62, 2.65, 2.68, 2.71, 2.74, 2.77, 2.80, 2.83, 2.86, 2.89, 2.92, 2.95, 2.98, 3.01, 3.04, 3.07, 3.10, 3.13, 3.16, 3.19, 3.21, 3.25, 3.29, 3.33, 3.37, 3.41, 3.45, 3.49, 3.54, 3.59, 3.64, 3.69, 3.73, 3.77, 3.81, 3.85, 3.89, 3.93, 3.97, 4.01, 4.06, 4.11, 4.16, 4.21, 4.29, 4.31, 4.36, 4.41, 4.51, 4.61, 4.65, 4.71, 4.74, 4.81, 4.85, 4.90, 5.01, 5.11, 5.14, 5.24, 5.34, 5.44, 5.45, 5.65, 5.75, 5.85, 5.95, or 6.00, or a range defined by any two of these values.

For example, the ratio of the micropore volume A $cm^3/g$ to the total pore volume C $cm^3/g$, that is, A/C, may be 0.35, 0.40, 0.45, 0.50, 0.55, 0.60, 0.65, 0.70, 0.75, 0.80, 0.85, 0.90, 0.95, or 1.00, or a range defined by any two of these values.

In an embodiment, $A/C > 0.39$. Alternatively, $0.75 \leq A/C \leq 0.95$.

For example, A/C may be 0.40, 0.43, 0.46, 0.49, 0.52, 0.55, 0.58, 0.61, 0.64, 0.67, 0.71, 0.74, 0.75, 0.78, 0.81, 0.84, 0.87, 0.89, 0.92, or 0.95, or a range defined by any two of these values.

In an embodiment, $0.20 \leq D \leq 3.00$. For example, the average pore diameter D nm may be 0.20, 0.50, 0.80, 1.10, 1.40, 1.70, 2.00, 2.30, 2.60, 2.90, or 3.00, or a range defined by any two of these values.

Preferably, $0.55 \leq D \leq 1.30$. For example, the average pore diameter D nm may be 0.55, 0.65, 0.75, 0.85, 0.95, 1.05, 1.15, 1.25, or 1.30, or a range defined by any two of these values.

Further, the hard carbon material not only has a high micropore content and a low average pore diameter but also contains an appropriately low content of mesopores with a small pore diameter. This avoids the deactivation of active ions ($Li^+$ and $Na^+$) due to difficulty in desolvation caused by a high mesopore content and/or large mesopore diameter, which would lead to challenges in improving the initial coulombic efficiency and high irreversible capacity. Thus, the hard carbon material satisfies: $0.20 \leq B/A \leq 1.81$. For example, the ratio of the cumulative pore volume up to the average pore diameter B $cm^3/g$ to the micropore volume A $cm^3/g$, that is, B/A, may be 0.20, 0.30, 0.40, 0.50, 0.60, 0.70, 0.80, 0.90, 1.00, 1.04, 1.10, 1.20, 1.30, 1.40, 1.50, 1.70, 1.80, or 1.81, or a range defined by any two of these values.

Preferably, $0.25 \leq B/A \leq 0.80$. For example, B/A may be 0.25, 0.26, 0.28, 0.32, 0.36, 0.38, 0.41, 0.45, 0.49, 0.51, 0.53, 0.57, 0.61, 0.65, 0.69, 0.73, 0.76, 0.77, or 0.80, or a range defined by any two of these values.

Alternatively, $B/A \leq 1.04$. For example, B/A may be 0.80, 0.86, 0.92, 0.98, 1.00, 1.01, 1.02, 1.03, or 1.04, or a range defined by any two of these values.

In an embodiment, $0.10 \leq A \leq 1.30$; $0.02 \leq B \leq 1.29$; and $0.10 \leq C \leq 1.87$.

For example, the micropore volume A $cm^3/g$ may be 0.20, 0.30, 0.40, 0.50, 0.60, 0.70, 0.80, 0.90, 1.00, 1.10, 1.20, 1.30, or a range defined by any two of these values.

The cumulative pore volume up to the average pore diameter B $cm^3/g$ may be 0.02, 0.12, 0.22, 0.32, 0.42, 0.52, 0.62, 0.72, 0.82, 0.92, 1.02, 1.12, 1.22, or 1.29, or a range defined by any two of these values.

The total pore volume C cm$^3$/g may be 0.10, 0.20, 0.30, 0.40, 0.50, 0.70, 0.80, 0.90, 1.00, 1.10, 1.20, 1.30, 1.40, 1.50, 1.60, 1.70, 1.80, or 1.87, or a range defined by any two of these values.

Preferably, $0.35 \leq A \leq 0.99$.

For example, the micropore volume A cm$^3$/g may be 0.35, 0.39, 0.43, 0.46, 0.49, 0.52, 0.57, 0.62, 0.67, 0.75, 0.82, 0.87, 0.92, or 0.99, or a range defined by any two of these values.

Preferably, $0.19 \leq B \leq 1.29$. For example, the cumulative pore volume up to the average pore diameter B cm$^3$/g may be 0.19, 0.20, 0.21, 0.22, 0.23, 0.24, 0.25, 0.26, 0.27, 0.28, 0.35, 0.42, 0.49, 0.51, 0.65, 0.77, 0.87, 0.88, 0.98, 1.08, 1.18, or 1.29, or a range defined by any two of these values.

Preferably, $0.37 \leq C \leq 1.80$. For example, the total pore volume C cm$^3$/g may be 0.37, 0.32, 0.45, 0.47, 0.48, 0.51, 0.54, 0.58, 0.61, 0.72, 0.83, 0.94, 1.05, 1.16, 1.27, 1.38, 1.49, 1.61, 1.72, or 1.80, or a range defined by any two of these values.

The micropore volume A, the cumulative pore volume up to the average pore diameter B, the total pore volume C, and the average pore diameter D may be obtained by the following method. First, a low content of the hard carbon material is crushed. Then, adsorption-desorption test is performed using high-purity nitrogen. An adsorption-desorption curve obtained from the nitrogen adsorption-desorption test is simulated using the advanced non-local density functional theory (Non-Local Density Functional Theory, NLDFT) model to obtain the average pore diameter D and a pore diameter-cumulative pore volume distribution curve. From the pore diameter-cumulative pore volume distribution curve, the micropore volume A, the cumulative pore volume up to the average pore diameter B, and the total pore volume C can be read.

Further, the hard carbon material exhibits a high total delithiation specific capacity and a low average delithiation potential. Within a potential range of 0 V to 2.5 V vs. Li/Li$^+$, the total delithiation specific capacity Q of the hard carbon material is 500 mAh/g to 1000 mAh/g.

Within a potential range of 0 V to 0.15 V vs. Li/Li$^+$, the specific capacity $Q_1$ of the hard carbon material accounts for 45% to 85% of the total delithiation specific capacity Q, that is, $Q_1/Q$ is 45% to 85%. Preferably, $Q_1/Q \geq 67\%$. This indicates that both the average voltage and capacity of the hard carbon material are further improved.

Within a potential range of 0 V to 0.8 V vs. Li/Li$^+$, the specific capacity $Q_2$ of the hard carbon material accounts for 80% to 98% of the total delithiation specific capacity Q, that is, $Q_2/Q$ is 80% to 98%.

Thus, when the hard carbon material is used as a negative electrode material, the material helps improve the energy density of a lithium-ion battery having the hard carbon material.

Further, the hard carbon material exhibits a high total desodiation specific capacity and a low average desodiation potential. Within a potential range of 0 V to 2.5 V vs. Na/Na$^+$, the total desodiation specific capacity R of the hard carbon material is 250 mAh/g to 450 mAh/g.

Within a potential range of 0 V to 0.5 V vs. Na/Na$^+$, the specific capacity $R_1$ of the hard carbon material accounts for 80% to 91% of the total desodiation specific capacity R, that is, $R_1R$ is 80% to 91%.

Within a potential range of 0 V to 0.8 V vs. Na/Na$^+$, the specific capacity $R_2$ of the hard carbon material accounts for 89% to 95% of the total desodiation specific capacity R, that is, $R_2/R$ is 89% to 95%.

Thus, when the hard carbon material is used as a negative electrode material, the material helps improve the energy density of a sodium-ion battery having the hard carbon material.

In an embodiment, the hard carbon material is obtained by pre-carbonizing a hard carbon precursor, followed by mixing with a pore-forming agent and sintering. The pore-forming agent is a weak base.

A holding temperature for mixing and sintering is higher than a pre-carbonization temperature, and a temperature holding time for mixing and sintering is 1 hour to 6 hours.

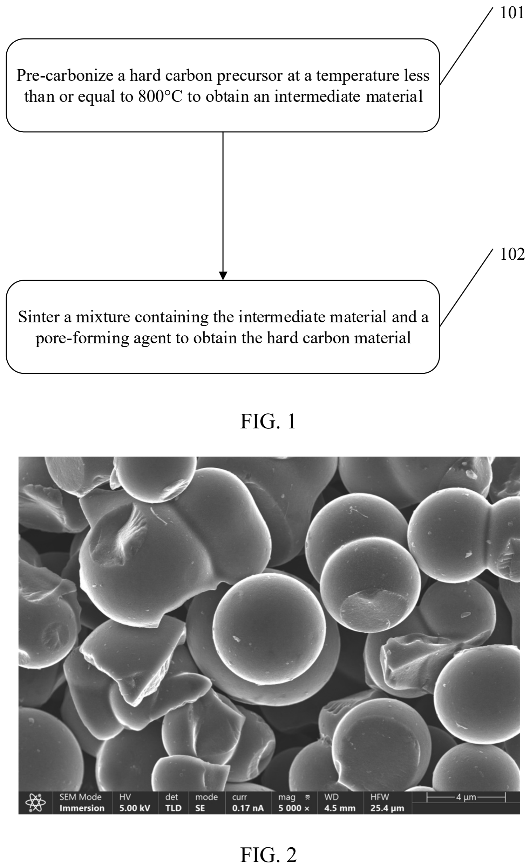

The preparation of the hard carbon material is described below with reference to FIG. 1.

Step 101: Pre-carbonize a hard carbon precursor at a temperature less than or equal to 800°C to obtain an intermediate material.

A pre-carbonization temperature is 400°C to 800°C. For example, the pre-carbonization temperature may be 500°C, 550°C, 600°C, 650°C, 700°C, or the like.

In an embodiment, the pre-carbonization time may be 1 hour to 10 hours.

A pre-carbonization atmosphere is an inert atmosphere, such as at least one of nitrogen, argon, or helium.

Further, the hard carbon precursor includes at least one of a carbon-containing polymer, a pitch-based material, a biomass material, or derivative carbon of a biomass material.

The carbon-containing polymer has a carbon-based skeleton.

In an embodiment, the carbon-containing polymer includes at least one of epoxy resin, phenolic resin, polyglycitol, polyvinyl alcohol, or polythiophene.

In an embodiment, the pitch-based material includes at least one of petroleum pitch, coal tar pitch, or natural pitch.

In an embodiment, the biomass material includes at least one of glucose, fructose, sucrose, maltose, starch, or tannin.

In an embodiment, the derivative carbon of the biomass material includes at least one of polymer carbon, biomass carbon, or mesophase carbon microspheres.

Step 102: Sinter a mixture containing the intermediate material and a pore-forming agent to obtain the hard carbon material.

A sintering condition includes holding at 600°C to 1000°C for 1 hour to 6 hours.

Specifically, the sintering atmosphere in Step 102 may be an inert atmosphere, where the inert atmosphere includes at least one of nitrogen, argon, or helium.

Alternatively, the sintering atmosphere may be an inert atmosphere containing an activating atmosphere to further enhance the uniformity of the micropore structure distribution and size in the hard carbon material. The activating atmosphere may include at least one of ammonia, carbon dioxide, or water vapor.

The holding temperature in Step 102 is higher than the pre-carbonization temperature in Step 101.

In an embodiment, a difference between the holding temperature in Step 102 and the pre-carbonization temperature in Step 101 is greater than or equal to 150°C, that is, $\Delta T \geq 150°C$.

In an embodiment, the mixture containing the intermediate material and the pore-forming agent may be obtained by mixing the components through at least one of the following methods: polymerization mixing, dissolution mixing, vibration mixing, ball milling mixing, or shear mixing.

In an embodiment, the mixture is formed by the intermediate material and the pore-forming agent. Polymerization mixing refers to mixing the intermediate material and the pore-forming agent through polymerization reactions at a target temperature, where the target temperature may be 100°C to 150°C.

Dissolution mixing refers to dissolving the intermediate material and the pore-forming agent in a solvent to achieve mixing, followed by removing the solvent, such as by evaporation, to obtain the mixture. The solvent may be water.

Vibration mixing refers to mixing the intermediate material and the pore-forming agent under vibration conditions.

Ball milling mixing refers to mixing the intermediate material and the pore-forming agent under the impact and grinding action of milling beads (such as zirconia milling beads) in equipment with milling beads, such as a ball mill.

Shear mixing refers to mixing the intermediate material and the pore-forming agent through shear forces provided by stirring paddles or blades in equipment such as a shear mixer or crusher.

In an embodiment, the pore-forming agent may be a template agent. The template agent includes at least one of polyethylene oxide-polypropylene oxide, polyethylene oxide-polybutylene oxide, polyethylene oxide-polystyrene, polyethylene oxide-polymethyl methacrylate diblock copolymer, polyethylene oxide-polypropylene oxide-polyethylene oxide triblock copolymer, or polypropylene oxide-polyethylene oxide-polypropylene oxide triblock copolymer.

Preferably, the pore-forming agent may be a weak base material capable of reacting with the intermediate material to generate gas, thereby further enhancing the uniformity of the micropore structure distribution and size in the hard carbon material through slow activation. The basic material includes at least one of sodium dihydrogen phosphate, potassium dihydrogen phosphate, sodium carbonate, potassium carbonate, sodium amide, or ammonium hydrogen phosphate.

Optionally, when the pore-forming agent includes the aforementioned basic material capable of reacting with the intermediate material to generate gas, the hard carbon material obtained in Step 102 may be subjected to acid washing followed by water washing.

Thus, in the preparation method described in Steps 101 and 102, a three-dimensional pore structure is initially constructed through pre-carbonization in Step 101 to obtain an intermediate material with preliminary channels, allowing the pore-forming agent in Step 102 to enter the channels of the intermediate material for slow etching. This enables the pore-forming agent to slowly activate within the channels, forming a micropore structure with a uniform distribution and size in the hard carbon material.

Based on the same inventive concept, an embodiment of this application further provides a negative electrode plate, where the negative electrode plate includes a current collector and a negative electrode material disposed on at least one surface of the current collector. The negative electrode material includes the hard carbon material as described above.

Specifically, the current collector may be aluminum foil, copper foil, copper alloy foil, nickel foil, stainless steel foil, titanium foil, foamed nickel, foamed copper, or a polymer substrate coated with a conductive metal. The conductive metal includes, but is not limited to, copper, nickel, or titanium. A component of the polymer substrate includes, but is not limited to, at least one of polyethylene, polypropylene, ethylenepropylene copolymer, polyethylene terephthalate, polyethylene naphthalate, or poly(p-phenylene terephthalamide).

In an embodiment, a thickness of the negative electrode current collector is 4 $\mu$m to 12 $\mu$m.

A thickness of a negative electrode material layer on any surface of the negative electrode current collector is 30 $\mu$m to 130 $\mu$m.

In an embodiment, based on the negative electrode material, a mass percentage of the hard carbon material is 10% to 100%. In an embodiment, the negative electrode material may further include at least one of natural graphite or artificial graphite.

The negative electrode material further includes at least one of a thickener, a conductive agent, or a binder.

The thickener may be, for example, sodium carboxymethyl cellulose.

The conductive agent may include, but is not limited to, a carbon material, a metal, or a conductive polymer. The carbon material may include at least one of conductive carbon black (Super P), carbon nanotubes (CNTs), carbon nanofibers, carbon dots, or graphene. The metal may include at least one of metal powder or metal fiber of copper, iron, aluminum, or the like. The conductive polymer may include at least one of polythiophene, polypyrrole, polyaniline, or poly(p-phenylene vinylene).

The binder may include, but is not limited to, at least one of polyvinyl alcohol, sodium polyacrylate, potassium polyacrylate, lithium polyacrylate, polyimide, polyamide-imide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene fluoride (PVDF), polytetrafluoroethylene (PTFE), polyvinyl butyral, aqueous acrylic resin, carboxymethyl cellulose (CMC), or sodium carboxymethyl cellulose (CMC-Na).

Based on the same inventive concept, an embodiment of this application further provides a secondary battery. The secondary battery includes the negative electrode plate as described above.

The secondary battery may further include a positive electrode plate, a separator, and an electrolyte.

The separator may be, for example, a polypropylene (PP) film or a polyethylene (PE) film.

The positive electrode plate includes a current collector and a positive electrode material disposed on a surface of the current collector opposite the negative electrode plate. The current collector may be aluminum foil, foamed aluminum, an aluminum composite current collector (to be specific, a current collector with a polymer support layer in the middle and aluminum metal layers on two surfaces), nickel foil, or foamed nickel.

In an embodiment, the secondary battery is a lithium-ion battery; the positive electrode material is a lithium-ion positive electrode material, such as lithium nickel cobalt manganese oxide, lithium nickel cobalt aluminum oxide, lithium cobalt oxide, lithium iron phosphate, lithium manganese oxide, or Prussian blue.

The electrolyte includes a lithium salt and a non-aqueous solvent.

The lithium salt includes at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, $C_4BLiO_8$, $LiBO_2$, or $BF_2H_2LiO$.

The non-aqueous solvent may include, but is not limited to, a carbonate compound, carboxylate compound, ether compound, or another organic solvent.

In an embodiment, the secondary battery is a sodium-ion battery. The positive electrode material may be, for example, Prussian white.

The electrolyte includes a sodium salt and a non-aqueous solvent. The sodium salt may include at least one of $NaPF_6$, $NaClO_4$, $NaBCl_4$, $NaSO_3CF_3$, or $Na(CH_3)C_6H_4SO_3$.

The non-aqueous solvent may include, but is not limited to, a carbonate compound, carboxylate compound, ether compound, or another organic solvent.

In an embodiment, the carboxylate compound in the non-aqueous solvent may include, but is not limited to, at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone.

In an embodiment, the ether compound in the non-aqueous solvent may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran.

In an embodiment, the another organic solvent in the non-aqueous solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In an embodiment, the carbonate compound in the non-aqueous solvent may include, but is not limited to, at least one of a linear carbonate compound, cyclic carbonate compound, or fluorinated carbonate compound.

The linear carbonate compound may include, but is not limited to, at least one of dimethyl carbonate (DMC), diethyl carbonate (DEC), dipropyl carbonate (DPC), methyl propyl carbonate (MPC), ethyl propyl carbonate (EPC), and methyl ethyl carbonate (MEC).

The cyclic carbonate may include, but is not limited to, at least one of ethylene carbonate (EC), propylene carbonate (PC), butylene carbonate (BC), or vinyl ethylene carbonate (VEC).

The fluorinated carbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethyl ethylene carbonate.

Based on the same inventive concept, an embodiment of this application further provides an electric device.

The electric device includes, but is not limited to, notebook computers, pen-input computers, mobile computers, e-book readers, portable phones, portable fax machines, portable copiers, portable printers, head-mounted stereo headsets, video recorders, liquid-crystal-display televisions, portable cleaners, portable CD players, mini-disc players, transceivers, electronic notepads, calculators, memory cards, portable recorders, radios, backup power supplies, motors, automobiles, motorcycles, electric bicycles, bicycles, lighting fixtures, toys, gaming consoles, clocks, power tools, flashlights, cameras, household large-scale batteries, and lithium-ion capacitors.

The following provides a detailed description through examples and comparative examples.

The following examples describe the disclosed content of this application in more detail. These examples are provided for illustrative purposes only, as various modifications and changes within the scope of the disclosed content of this application are apparent to those skilled in the art. Unless otherwise stated, all parts, percentages, and ratios reported in the following examples are based on mass, all reagents used in the examples are commercially available or synthesized by conventional methods and can be used directly without further processing, and all instruments used in the examples are commercially available.

(I) Test methods and equipment

(1) The micropore volume A $cm^3/g$, cumulative pore volume up to the average pore diameter B $cm^3/g$, total pore volume C $cm^3/g$, and average pore diameter D nm of the hard carbon material were tested.

First, 20 g of the hard carbon material was placed in an IKA grinder (model MultiDrive control MT Package). Then, a speed of the IKA grinder was set to 10,000 rpm to crush the hard carbon material for 30 seconds, to obtain crushed powder.

Then, a Micromeritics TriStar II Plus 3030 three-station specific surface area and porosity analyzer was used to measure the crushed powder as a sample.

S1. An amount of 1 g to 8 g of the sample was placed in a 1/2-inch long tube with a bulb (a tube diameter at the bulb part is 12 mm), where the sample should at least cover one-third of the bulb volume.

S2. The sample was pre-treated in the bulb tube at 200°C for 2 hours, then underwent adsorption-desorption test, where a gas used for adsorption-desorption was nitrogen with a purity of 99.999%, and a test condition was 77 K, to obtain a nitrogen adsorption-desorption curve.

S3. An advanced non-local density functional theory (NLDFT) model was used to simulate the obtained data to obtain the average pore diameter D and a pore diameter-cumulative pore volume distribution curve. From the pore diameter-cumulative pore volume distribution curve, a cumulative pore volume at a pore diameter of 2 nm was read as the micropore volume A, a cumulative pore volume corresponding to the average pore diameter D as the cumulative pore volume B up to the average pore diameter, and a maximum pore volume in the pore diameter-cumulative pore volume distribution curve as the total pore volume C.

(2) Electrochemical performance of the hard carbon material was tested by testing a secondary battery in which the hard carbon material served as a component of a negative electrode material.

(i) Preparation of negative electrode plate

First, the hard carbon material, binder styrene-butadiene rubber (SBR), and thickener sodium carboxymethyl cellulose (CMC) were thoroughly mixed at a mass ratio of 97:2:1 in deionized water to form a negative electrode slurry with a solid content of 40%.

Then, the negative electrode slurry was applied to a negative electrode current collector copper foil and dried at 85°C. After cold pressing, cutting, slitting, and vacuum drying at 120°C for 12 hours, a negative electrode plate was obtained.

(ii) Preparation of lithium-ion pouch battery

First, a positive electrode plate was prepared. A positive electrode active material ($LiNi_{0.8}Co_{0.1}Mn_{0.1}$) with a $D_v50$ of 10 $\mu$m, porous carbon additive, conductive agent Super P, and binder polyvinylidene fluoride (PVDF) were mixed at a mass ratio of 96:1:1.4:1.6 in an N-methylpyrrolidone (NMP) solvent to form a positive electrode slurry with a solid content of 72 wt%. Then, the positive electrode slurry was applied to a positive electrode current collector aluminum foil, and dried at 85°C. After cold pressing, cutting, slitting, and drying under vacuum at 85°C for 4 hours, the positive electrode plate was obtained.

Next, an electrolyte was prepared. In a dry argon atmosphere glovebox, ethylene carbonate (EC), propylene carbonate (PC), propyl propionate (PP), and ethyl propionate (EP) were mixed at a mass ratio of EC:PC:EP:PP=25:10:25:40; 1,3-propane sultone and fluoroethylene carbonate were added, dissolved, and stirred thoroughly; and lithium salt $LiPF_6$ was added and mixed uniformly to obtain the electrolyte, where a content of 1,3-propane sultone was 2.5%, a content of fluoroethylene carbonate was 3.6%, and a content of $LiPF_6$ was 12.5%. All the contents refer to mass contents of the respective materials in the electrolyte.

Then, a polyethylene porous polymer film of 9 μm (porosity of 30%) was used as a separator.

Finally, the positive electrode plate, separator, and negative electrode plate were stacked in order, with the separator positioned between the positive electrode and negative electrode to separate the positive electrode plate and negative electrode plate, and were placed in an outer packaging aluminum-plastic film after winding and tab welding. The electrolyte was injected, and after vacuum encapsulation, standing, formation, and shaping, a lithium-ion pouch battery was obtained.

(iii) Preparation of sodium-ion pouch battery

For the preparation of the positive electrode plate, refer to the preparation of the positive electrode plate in the lithium-ion pouch battery described in (ii), except that the positive electrode active material $LiNi_{0.8}Co_{0.1}Mn_{0.1}$ was replaced with copper nickel iron manganese oxide $NaCu_{1/9}Ni_{2/9}Fe_{1/3}Mn_{1/3}O_2$. The rest was the same as the preparation of the positive electrode plate in the lithium-ion battery.

Preparation of an electrolyte: In a dry argon atmosphere glovebox, the base solvents ethylene carbonate (EC) and diethyl carbonate (DEC) were mixed at a mass ratio of 1:1, then fluoroethylene carbonate was added, dissolved and stirred thoroughly, a sodium salt $NaPF_6$ was added and mixed uniformly to obtain the electrolyte. Based on a mass of the electrolyte, a mass percentage of the sodium salt was 12.5%, the mass percentage of fluoroethylene carbonate was 3.5%, and the balance was the base solvent.

Preparation of a separator: PVDF and aluminum oxide ceramic were mixed at a mass ratio of 9:1, and deionized water was added as a solvent to prepare a slurry with a solid content of 12 wt%. After uniform stirring, the slurry was evenly applied to a surface of a polyethylene porous polymer film of 9 μm (porosity of 30%). After drying, a separator with one side coated with an aluminum oxide ceramic coating of 2 μm was obtained.

The prepared positive electrode plate, separator, and negative electrode plate were stacked in order, with the separator positioned between the positive electrode plate and negative electrode plate for separation, and were wound to obtain an electrode assembly. After tab welding, the electrode assembly was placed in an aluminum-plastic film packaging bag, and dried in a vacuum oven at 80°C for 12 hours to remove moisture. The prepared electrolyte was injected, and after vacuum encapsulation, standing, formation, degassing, and shaping, a sodium-ion pouch battery was obtained.

(iv) Test of delithiation specific capacity and initial coulombic efficiency of lithium-ion battery with hard carbon material as negative electrode material of lithium-ion battery

The negative electrode plate was cut into a diameter disc of 14 mm as a working electrode. A lithium disc was used as a counter electrode, and a porous polyethylene film (provided by Celgard) as the separator. The electrolyte was injected. A coin cell was obtained through assembly.

The coin cell was discharged at 0.05C, 0.01C, and 0.005C in three stages to 0 V, and a first discharge capacity was recorded; then charged at a constant current of 0.1C to 2.5 V, and a first charge capacity was recorded. The initial efficiency was calculated according to the following formula:

$$\text{initial efficiency} = \text{first charge capacity/first discharge capacity} \times 100\%$$

Based on a coating weight and area of the negative electrode slurry during the electrode preparation process, a mass of the hard carbon material in the negative electrode plate was calculated. A first reversible specific capacity of the hard carbon material from 0 V to 2.5 V, that is, a total delithiation specific capacity Q (mAh/g), was calculated according to the following formula:

total delithiation specific capacity Q = first charge capacity/mass of hard carbon material

A specific capacity of the hard carbon material in a potential range of 0 V to 0.15 V vs. $Li/Li^+$ was denoted as $Q_1$; and a specific capacity of the hard carbon material in a potential range of 0 V to 0.8 V vs. $Li/Li^+$ was denoted as $Q_2$.

The electrolyte included a base solvent and a lithium salt, with a lithium salt concentration of 1 mol/L. The base solvent was formed by ethylene carbonate (EC) and diethyl carbonate (DEC) at a mass ratio of 1:1. The lithium salt was $LiPF_6$.

(v) Test of desodiation specific capacity and initial coulombic efficiency of sodium-ion battery with hard carbon material as negative electrode material of sodium-ion battery

This test corresponded to the preparation of the lithium-ion coin cell. The negative electrode plate was replaced with a negative electrode plate corresponding to the sodium-ion battery and a sodium disc was used as the counter electrode. The lithium salt in the electrolyte was replaced with a sodium salt $NaPF_6$. The rest was consistent with the preparation method of the lithium-ion coin cell. In this way, the sodium-ion coin cell can be obtained.

The coin cell was discharged at 0.05C, 0.01C, and 0.005C in three stages to 0 V, and a first discharge capacity was recorded; and charged at a constant current of 0.1C to 2.5 V, and a first charge capacity was recorded. The initial efficiency is calculated according to the following formula:

$$\text{initial efficiency} = \text{first charge capacity/first discharge capacity} \times 100\%$$

Based on a coating weight and area of the negative electrode slurry during the electrode preparation process, a mass of the hard carbon material in the negative electrode plate was calculated. A first reversible specific capacity of the hard carbon material from 0 V to 2.5 V, that is, a total desodiation specific capacity R (mAh/g), was calculated by the following formula:

total desodiation specific capacity R = first charge capacity/mass of hard carbon material

A specific capacity of the hard carbon material in a potential range of 0 V to 0.5 V vs. Na/Na$^+$ was denoted as $R_1$, and a specific capacity of the hard carbon material in a potential range of 0 V to 0.8 V vs. Na/Na$^+$ was denoted as $R_2$.

(vi) Test of energy densities (ED) of lithium-ion pouch battery and sodium-ion pouch battery

At room temperature, the battery was charged to 4.48 V (a cut-off voltage for the lithium-ion pouch battery) or 3.95 V (a cut-off voltage for the sodium-ion pouch battery) at a current of 0.2C; charged at a constant voltage; discharged at a constant current of 0.2C to 2.0 V. This was record as one cycle, and a discharge capacity D and discharge energy E of the first cycle were recorded. A length, width, and thickness of a cell at 50% state of charge was tested to calculate a cell volume V. An average discharge voltage U was equal to E/D, and a volumetric energy density was calculated as: ED = (D × U)/V.

(vii) Test of capacity retention rates of lithium-ion pouch battery and sodium-ion pouch battery

At a test temperature of 25°C, the pouch battery was left standing for 5 minutes, and was charged and discharged within designed voltage ranges at a current of 1.0C. A first discharge capacity was recorded as $D_0$.

The above charge-discharge process was repeated 300 times, and a discharge capacity of the last cycle was recorded as $D_1$. A cycling capacity retention rate was $D_1/D_0$, in percentage.

(II) Preparation

Example 1

S1. Phenolic resin was used as a hard carbon precursor, and phenolic resin was sintered in an argon atmosphere at 650°C for 1 hour and cooled to obtain an intermediate material.

S2. Sodium dihydrogen phosphate was used as a pore-forming agent. A mixture of sodium dihydrogen phosphate and phenolic resin was held in an argon atmosphere at 850°C for 1 hour, and then underwent cooling, acid washing, water washing, and drying.

A mass percentage of sodium dihydrogen phosphate in the mixture was 20%.

FIG. 2 shows a schematic SEM diagram of the hard carbon material prepared in Example 1. The morphology of the hard carbon material is as shown in FIG. 2.

Example 2

The difference from Example 1 lies only in that the temperature holding time of the mixture in S2 was 2 hours.

Example 3

The difference from Example 1 lies only in that the temperature holding time of the mixture in S2 was 4 hours.

Example 4

The differences from Example 1 lie in that the holding temperature in S2 was 900°C and the temperature holding time was 2 hours.

In addition, the mass percentage of sodium dihydrogen phosphate in the mixture was 10%.

Example 5

The difference from Example 4 lies only in that the temperature holding time in S2 was 4 hours.

Example 6

The difference from Example 4 lies only in that the temperature holding time in S2 was 6 hours.

Example 7

The differences from Example 1 lie in that the holding temperature in S2 was 1000°C, and the temperature holding time was 2 hours.
In addition, the mass percentage of sodium dihydrogen phosphate in the mixture was 10%.

Example 8

The difference from Example 7 lies only in that the temperature holding time in S2 was 4 hours.

Example 9

The differences from Example 1 lie in that in S2, a mixture of sodium dihydrogen phosphate and phenolic resin was held in an argon atmosphere at 900°C for 1 hour, and then underwent cooling, acid washing, water washing, and drying.
In addition, the mass percentage of sodium dihydrogen phosphate in the mixture was 50%.

Comparative example 1

The difference from Example 4 lies only in that the temperature holding time in S2 was 15 hours.

Comparative example 2

The differences from Example 1 lie in that in S2, the holding temperature was 700°C, and the temperature holding time was 2 hours.
For the hard carbon materials obtained in the above examples and comparative examples, their respective micropore volume A $cm^3/g$, cumulative pore volume up to the average pore diameter B $cm^3/g$, total pore volume C $cm^3/g$, and average pore diameter D nm were tested. The specific test data are shown in Table 1 and Table 2.

**Table 1**

| No. | Micropore volume A ($cm^3/g$) | Average pore diameter D (nm) | Cumulative pore volume up to average pore diameter B ($cm^3/g$) | Total pore volume C ($cm^3/g$) | D/B | B/A | A/C |
|---|---|---|---|---|---|---|---|
| Example 1 | 0.10 | 0.20 | 0.02 | 0.10 | 10.00 | 0.20 | 1.00 |
| Example 2 | 0.35 | 0.55 | 0.28 | 0.37 | 1.96 | 0.80 | 0.95 |
| Example 3 | 0.75 | 0.90 | 0.19 | 1.00 | 4.74 | 0.25 | 0.75 |
| Example 4 | 0.39 | 0.65 | 0.20 | 0.45 | 3.25 | 0.51 | 0.87 |
| Example 5 | 0.52 | 1.20 | 0.20 | 0.58 | 6.00 | 0.38 | 0.90 |
| Example 6 | 0.99 | 1.30 | 1.29 | 1.80 | 1.01 | 1.30 | 0.55 |
| Example 7 | 0.42 | 3.00 | 0.76 | 1.20 | 3.95 | 1.81 | 0.35 |
| Example 8 | 1.30 | 2.20 | 0.22 | 1.87 | 10.00 | 0.17 | 0.70 |
| Example 9 | 0.46 | 1.50 | 0.35 | 0.52 | 4.29 | 0.76 | 0.89 |
| Comparative example 1 | 2.00 | 3.5 | 3.89 | 6.67 | 0.9 | 1.94 | 0.30 |

(continued)

| No. | Micropore volume A (cm³/g) | Average pore diameter D (nm) | Cumulative pore volume up to average pore diameter B (cm³/g) | Total pore volume C (cm³/g) | D/B | B/A | A/C |
|---|---|---|---|---|---|---|---|
| Comparative example 2 | 0.07 | 0.13 | 0.01 | 0.35 | 13 | 0.14 | 0.20 |

The negative electrode plates prepared from the hard carbon materials of Examples 1 to 8 and Comparative examples 1 and 2 were used as the negative electrode plates for lithium-ion batteries. The test data for the above lithium-ion batteries are shown in Table 2.

**Table 2**

| No. | Specific capacity $Q_1$ at 0 V to 0.15 V (mAh/g) | Specific capacity $Q_2$ at 0 V to 0.8 V (mAh/g) | Total delithiation specific capacity Q (mAh/g) | $Q_1Q$ | $Q_2/Q$ | Initial coulombic efficiency | ED (Wh/L) | Capacity retention rate |
|---|---|---|---|---|---|---|---|---|
| Example 1 | 225 | 400 | 500 | 45% | 80% | 85% | 748 | 83% |
| Example 2 | 579 | 828 | 998 | 58% | 83% | 87% | 859 | 89% |
| Example 3 | 705 | 853 | 870 | 81% | 98% | 90% | 899 | 96% |
| Example 4 | 792 | 820 | 932 | 85% | 88% | 92% | 932 | 92% |
| Example 5 | 634 | 748 | 880 | 72% | 85% | 89% | 869 | 90% |
| Example 6 | 527 | 723 | 786 | 67% | 92% | 87% | 796 | 95% |
| Example 7 | 282 | 472 | 576 | 49% | 82% | 83% | 704 | 89% |
| Example 8 | 436 | 675 | 703 | 62% | 96% | 80% | 716 | 86% |
| Comparative example 1 | 136 | 326 | 424 | 32% | 77% | 80% | 612 | 78% |
| Comparative example 2 | 140 | 261 | 389 | 36% | 67% | 83% | 645 | 71% |

Further, the hard carbon material prepared in Example 9 was used as a component of the negative electrode material to prepare a negative electrode plate and assemble a corresponding sodium-ion battery. The following is obtained by testing the sodium-ion battery:

within the potential range of 0 V to 2.5 V vs. Na/Na⁺, the total desodiation specific capacity R of the hard carbon material is 345 mAh/g;

within the potential range of 0 V to 0.5 V vs. Na/Na⁺, the specific capacity $R_1$ of the hard carbon material is 314 mAh/g, with $R_1/R$ being 91%; and

within the potential range of 0 V to 0.8 V vs. Na/Na⁺, the specific capacity $R_2$ of the hard carbon material is 328 mAh/g, with $R_2/R$ being 95%.

According to the test, the initial coulombic efficiency of the sodium-ion battery is 88%, the ED is 308 Wh/L, and the capacity retention rate is 90%.

Thus, compared with current hard carbon materials used for sodium-ion batteries, the hard carbon materials in the above examples exhibit a higher total desodiation specific capacity R within the potential range of 0 V to 2.5 V vs. Na/Na⁺, a higher specific capacity $R_1$ within the potential range of 0 V to 0.5 V vs. Na/Na⁺, and a higher specific capacity $R_2$ within the potential range of 0 V to 0.8 V vs. Na/Na⁺.

From the test data of the above examples and comparative examples, it can be learned that when $1.00 < D/B \leq$

10.00 and $0.35 \leq A/C \leq 1.00$, the hard carbon material exhibits a high specific capacity (that is, both the total delithiation specific capacity Q and the total desodiation specific capacity R are at a high level) and a stable low potential platform. Moreover, when the hard carbon material is used as a component of a negative electrode material in a secondary battery, an initial coulombic efficiency, energy density, and capacity retention rate of the secondary battery can be improved.

It is clear that those skilled in the art can make various modifications and variations to this application without departing from the spirit and scope of this application. Thus, if these modifications and variations of this application fall within the scope of the claims and their equivalent technologies, this application is intended to include these modifications and variations.

**Claims**

1. A hard carbon material, wherein the hard carbon material has a porous structure, in a pore diameter-cumulative pore volume distribution curve, an average pore diameter of the hard carbon material is D nm, a cumulative pore volume at the average pore diameter of the hard carbon material is B cm$^3$/g, a cumulative pore volume at a pore diameter of 2 nm of the hard carbon material is A cm$^3$/g, and a total pore volume of the hard carbon material is C cm$^3$/g, wherein

$$1.00 < D/B \leq 10.00, \text{ and } 0.35 \leq A/C \leq 1.00.$$

2. The hard carbon material according to claim 1, wherein $0.20 \leq B/A \leq 1.81$.

3. The hard carbon material according to claim 1 or 2, wherein the hard carbon material satisfies at least one of the following conditions:

$$(1)\ 1.96 \leq D/B \leq 6.00;$$

$$(2)\ 0.20 \leq B/A \leq 1.04;$$

or

$$(3)\ 0.39 < A/C \leq 1.00.$$

4. The hard carbon material according to any one of claims 1 to 3, wherein $0.75 \leq A/C \leq 0.95$.

5. The hard carbon material according to any one of claims 1 to 4, wherein $0.25 \leq B/A \leq 0.80$.

6. The hard carbon material according to any one of claims 1 to 5, wherein $0.10 \leq A \leq 1.30$.

7. The hard carbon material according to any one of claims 1 to 6, wherein $0.02 \leq B \leq 1.29$.

8. The hard carbon material according to any one of claims 1 to 7, wherein $0.10 \leq C \leq 1.87$.

9. The hard carbon material according to any one of claims 1 to 8, wherein $0.20 \leq D \leq 3.00$.

10. The hard carbon material according to any one of claims 1 to 9, wherein $0.35 \leq A \leq 0.99$.

11. The hard carbon material according to any one of claims 1 to 10, wherein $0.19 \leq B \leq 1.29$.

12. The hard carbon material according to any one of claims 1 to 11, wherein within a potential range of 0 V to 2.5 V vs. Li/Li$^+$, a total delithiation specific capacity of the hard carbon material is Q mAh/g, wherein Q is 500 mAh/g to 1000 mAh/g;

within a potential range of 0 V to 0.15 V vs. Li/Li$^+$, a specific capacity of the hard carbon material is $Q_1$ mAh/g, wherein $Q_1/Q$ is 45% to 85%; and
within a potential range of 0 V to 0.8 V vs. Li/Li$^+$, a specific capacity of the hard carbon material is $Q_2$ mAh/g,

wherein $Q_2/Q$ is 80% to 98%.

13. The hard carbon material according to any one of claims 1 to 12, wherein within a potential range of 0 V to 2.5 V vs. Na/Na$^+$, a total desodiation specific capacity of the hard carbon material is R mAh/g, wherein R is 250 mAh/g to 450 mAh/g;

within a potential range of 0 V to 0.5 V vs. Na/Na$^+$, a specific capacity of the hard carbon material is $R_1$ mAh/g, wherein $R_1/R$ is 80% to 91%; and
within a potential range of 0 V to 0.8 V vs. Na/Na$^+$, a specific capacity of the hard carbon material is $R_2$ mAh/g, wherein $R_2/R$ is 89% to 95%.

14. A secondary battery, comprising a positive electrode plate, a negative electrode plate, and an electrolyte; wherein the negative electrode plate comprises a current collector and a negative electrode material disposed on at least one surface of the current collector, wherein the negative electrode material comprises the hard carbon material according to any one of claims 1 to 13.

15. An electric device, comprising: the secondary battery according to claim 14.

101

Pre-carbonize a hard carbon precursor at a temperature less than or equal to 800°C to obtain an intermediate material

102

Sinter a mixture containing the intermediate material and a pore-forming agent to obtain the hard carbon material

FIG. 1

| SEM Mode | HV | det | mode | curr | mag ⅀ | WD | HFW | ⊢——4 µm——⊣ |
| Immersion | 5.00 kV | TLD | SE | 0.17 nA | 5 000 × | 4.5 mm | 25.4 µm | |

FIG. 2